# EUROPEAN PATENT APPLICATION

(11) **EP 2 854 388 A1**
(43) Date of publication of application: **01.04.2015**
(21) Application number: 14185497.6
(22) Date of filing: 19.09.2014
(51) Int. Cl.: H04N 1/48

(54) **Apparatus for acquiring multispectral images of printed sheets**

(30) Priority: 25.09.2013 IT MI20131580
(71) Applicant: Parvis Systems and Services S.P.A., 37019 Peschiera del Garda, VR (IT)
(72) Inventor: De Toni, Giovanni, 20162 MILANO (IT); Salgari, Roberto, 20080 BASIGLIO MI (IT)
(74) Representative: Modiano, Micaela Nadia

(57) **Abstract**

An apparatus (1) for acquiring multispectral images of printed sheets, comprising a device for acquiring images of a printed sheet (3) and a device for lighting such printed sheet (3), the image acquisition device being a grayscale video camera (5) and the lighting device being a variable-spectrum lighting device (7).

## Description

The present invention relates to an apparatus for acquiring multispectral images of printed sheets.

The production of some types of printed products requires the application of one or more serial numbers on each element printed, which are adapted to uniquely identify the individual element. For example, in the printing of paper currency, each printed sheet contains several elements (banknotes) and each element contains from one to two serial numbers. Other examples are represented by the production of lottery tickets and by the production of tax stamps. The serial number is usually overprinted on the graphic images that are generated during the preceding steps of production.

Checking the correctness of the value and of the print quality of each serial number is of fundamental importance in order to ensure the uniqueness, security and traceability of the products. Incorrect values can include for example the duplication of numbers, while quality problems can render the number illegible, or lead to incorrect interpretations of the number proper (for example confusion between 3 and 8 or between 5 and 6). In certain cases, in addition to checking the correctness and quality, in order to ensure the appropriate security characteristics of the printing, it is necessary also to be able to check the response of the printing ink to particular wavelengths, evaluating for example opacity under infrared, emission under ultraviolet light, etc. In other cases, owing to the characteristics of the backgrounds, it is necessary to use light with particular wavelengths in order to be able to obtain images that are characterized by a level of contrast, between the number and the background, which is adequate for the automatic recognition of the value and for the automatic checking of the print quality.

The large dimensions of the sheets used for security printing, for example paper currency, which can reach up to 820 mm in width and 700 mm in length, and the spatial resolution necessary for reliable quality control, which can be rated as at least 250 dpi, make it almost impossible to acquire complete images of the sheets at the typical production speed of the numbering machines, i.e. speeds comprised between 3 and 4 m/sec, by way of conventional multispectral video cameras.

Owing to the above mentioned limitations of resolution and speed, the only technique currently available is based on the use of a wide band lighting system, i.e. white light, and a plurality of color video cameras arranged in a matrix. In this manner it is possible to detect, for example, three spectral components (red, green and blue), each detected by one video camera, but this does not ensure multispectrality, since detection is restricted to the chromatic channels that are present in the video cameras themselves. Therefore it is not possible to use radiation with different wavelengths, for example yellow, and still less radiation with wavelengths in the non-visible spectrum, such as infrared (IR) or ultraviolet (UV).

Another drawback of conventional systems, which are constituted by multispectral video cameras in a matrix, consists in that they do not make it possible to obtain a complete image of the sheet, which is essential in order to be able to make overall assessments of the printing, of the distribution of defects and of the integrity of the sheet proper, by identifying for example the presence of creases or rips.

A further drawback of conventional systems consists in that they require mechanical adjustments for every change of format of the sheet, at least in order to prevent a serial number of a given element from falling astride the field framed by two different video cameras.

The aim of the present invention consists in providing an apparatus for acquiring multispectral images of printed sheets which solves the above technical problem, eliminates the drawbacks and overcomes the limitations of the known art by making it possible to acquire, in real time, high-resolution multispectral images of a printed sheet.

Within this aim, an object of the present invention is to provide an apparatus for acquiring multispectral images of a printed sheet which is capable of operating, on very large sheets, at speeds greater than or equal to 3 m/sec.

Another object of the invention consists in providing an apparatus for acquiring multispectral images which makes it possible to use, in a flexible manner, radiation at various different wavelengths, in the visible spectrum, infrared, and ultraviolet.

Another object of the invention consists in providing an apparatus for acquiring multispectral images which is capable of offering the widest guarantees of reliability and safety in use, is easy to implement and economically competitive when compared to the known art.

This aim and these and other objects which will become better apparent hereinafter are achieved by an apparatus for acquiring multispectral images of printed sheets, comprising a device for acquiring images of a printed sheet and a device for lighting said printed sheet, characterized in that said image acquisition device is a grayscale video camera and in that said lighting device is a variable-spectrum lighting device.

This aim is further achieved by a method for acquiring multispectral images of printed sheets, characterized in that it repeats, for a number of times equal to N, where N is the number of different wavelengths at which a printed sheet is irradiated, the steps of:
- generating radiation at a certain wavelength at an image acquisition line on said printed sheet;
- acquiring an image of said printed sheet at said acquisition line;
and in that it comprises furthermore the step of:
- causing the advancement of said printed sheet in a manner that is synchronized with the repetition of said steps of generating radiation and acquiring an image.

Further characteristics and advantages of the invention will become better apparent from the detailed description of a preferred, but not exclusive, embodiment of an apparatus for acquiring multispectral images of printed sheets, which is illustrated by way of non-limiting example in the accompanying drawings wherein:

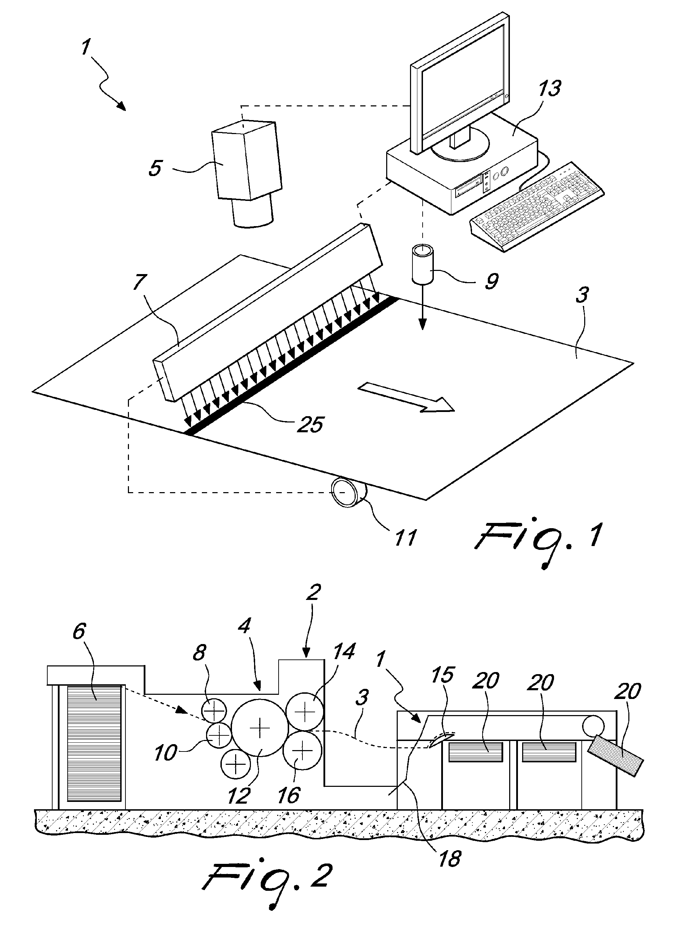

Figure 1 is a schematic diagram of an embodiment of an apparatus for acquiring multispectral images of printed sheets, according to the invention;
Figure 2 is a schematic diagram of a printing machine fitted with the apparatus for acquiring multispectral images in Figure 1;

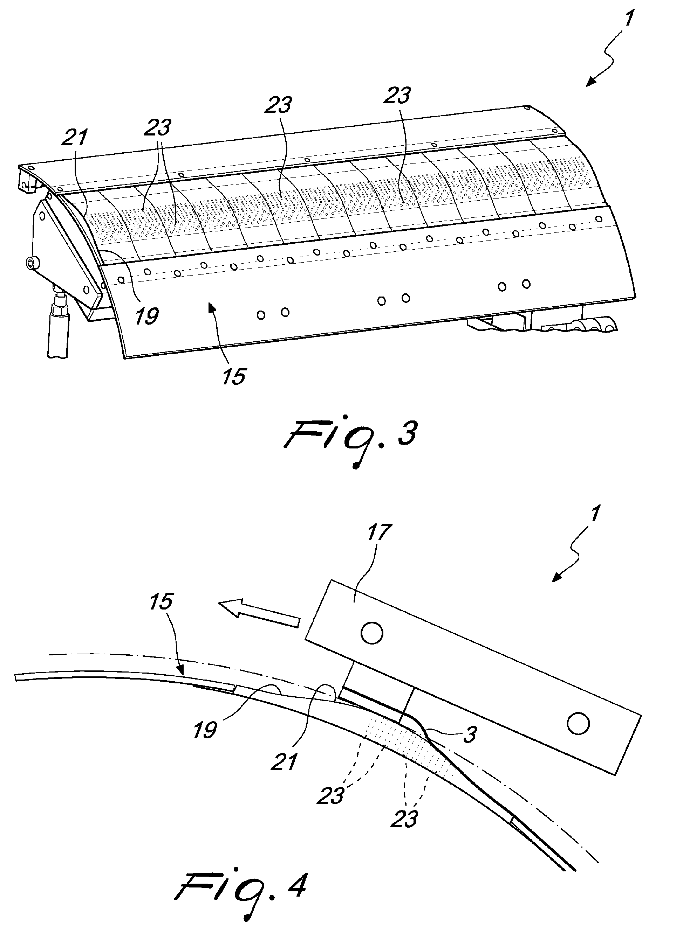

Figure 3 is a perspective view of the sliding surface of the apparatus for acquiring multispectral images in Figure 1, on which the printed sheets slide;
Figure 4 is a cross-sectional illustrative view of the sliding surface in Figure 3;
Figures 5 and 6 show two different examples of acquisition of multispectral images, respectively with four and with two spectral bands of acquisition.

With reference to the figures, the apparatus for acquiring multispectral images of printed sheets, generally designated by the reference numeral 1, comprises a device for acquiring images of a printed sheet 3 and a device for lighting the printed sheet 3.

According to the invention, the image acquisition device is a grayscale video camera 5, and the lighting device is a variable-spectrum lighting device 7.

In particular, the grayscale video camera 5 and the variable-spectrum lighting device 7 are advantageously linear.

The apparatus 1 for acquiring multispectral images of printed sheets advantageously comprises a sensor 9 for detecting the presence of the printed sheet 3 and a sensor 11 for detecting the movement of the printed sheet 3, both connected to a computer 13. The computer 13 manages the synchronization of the operation of the grayscale video camera 5 and of the variable-spectrum lighting device 7 with the operation of a system 4 for conveying the printed sheets 3, as will be better explained below.

The variable-spectrum lighting device 7 advantageously comprises a plurality of LED sources, each adapted to emit radiation at a certain wavelength that is selected from a group comprising at least two different wavelengths.

The LED sources can emit wavelengths that are selected from the group constituted by wavelengths in the visible light spectrum (for example yellow, red, green, blue), in the infrared spectrum, or in the ultraviolet spectrum.

In particular, the variable-spectrum lighting device 7 advantageously comprises a plurality of LED sources, each adapted to emit radiation at a certain wavelength that is selected from a group comprising a number N of different wavelengths, where the lighting device 7 also comprises a programming device that is adapted to activate sequentially the LED sources that emit radiation at a certain wavelength that is selected from a group comprising a number K, equal to or smaller than N, of different wavelengths.

The apparatus 1 advantageously comprises a sliding surface 15, over which the printed sheet 3 is entrained by at least one entrainment gripper 17. The sliding surface 15 has a curved profile 19 and further comprises a rounded raised portion 21 protruding from the curved profile 19. The entrainment gripper 17 is adapted to place in traction the printed sheet 3, when passing over the rounded raised portion 21.

Furthermore the sliding surface 15 can comprise, at the rounded raised portion 21, a plurality of suction holes 23 that are adapted to keep the printed sheet 3 so that it adheres to the sliding surface 15.

The apparatus 1 is adapted to be installed on a printing machine 2, and is adapted to acquire images of the printed sheets 3 while these are moved by the mechanical conveyance system 4 of the printing machine 2.

The printing machine 2 advantageously comprises a sheet feeder machine 6, a sheet feeder drum 8 coupled to a transfer drum 10, a pressure roller 12, an upper printing roller 14, and a lower printing roller 16. For example, in machines for numbering banknotes, the rollers 14 and 16 print on the sheets 3, and in particular on each banknote contained in the sheets 3, respectively an upper numbering and a lower numbering.

The apparatus 1 is advantageously arranged, in the printing machine 2, downstream of the rollers 14 and 16, i.e. at the sheet output chain 18, and thus upstream of the output stacks 20 of sheets 3.

The method for acquiring multispectral images of printed sheets is described below.

According to the invention, the peculiarity of the method for acquiring multispectral images of printed sheets consists in that it repeats, for a number of times equal to N, where N is the number of different wavelengths at which a printed sheet 3 is irradiated, the steps of:
- generating radiation at a certain wavelength at an image acquisition line 25 on the printed sheet 3;
- acquiring an image of the printed sheet 3 at the acquisition line 25;
and in that it further comprises the step of:
- causing the advancement of the printed sheet 3 in a manner that is synchronized with the repetition of the steps of generating radiation and acquiring an image.

Advantageously, furthermore, the advancement speed of the printed sheet 3 is directly proportional to the frequency of image acquisition, according to a factor equal to N.

The method for acquiring multispectral images can further comprise a step of correcting the misalignment, produced by the advancement of the printed sheet 3, between the images of a same portion of the printed sheet 3 which were acquired during the above mentioned repetition of the steps of generating radiation and acquiring an image.

More specifically, the variable-spectrum lighting device 7 generates a linear beam of light at the acquisition line 25 of the images. The lighting device 7 can comprise a plurality of LED sources, for example arranged along one or more rows, which are capable of emitting radiation at various different wavelengths in the visible light spectrum, in the infrared spectrum and in the ultraviolet spectrum. In particular, the wavelength of the radiation emitted can be selected, by way of a control circuit, so that at a given moment only the LED sources for a certain wavelength are active. The control circuit is advantageously adapted to ensure a high speed of switching between the LED sources of different wavelength, up to and including in the order of 400 KHz.

The grayscale video camera 5 acquires the image of the sheet 3 while the latter passes through the acquisition line 25, and the acquisition occurs by consecutive lines, while at each line the spectral emission is switched. In other words, once acquisition of a line is complete, the emission of the lighting system is switched synchronously and the lighting device 7 proceeds with the acquisition of the subsequent line.

In this manner consecutive lines are associated with the N different spectral components activated consecutively. After N lines it begins again from the first spectral component.

Synchronicity between the movement of the sheet 3, the video camera 5 and the lighting device 7 is ensured by an adapted synchronization circuit that avails of the sensor 9 for detecting the sheet 3, such as for example a photocell, and of the sensor 11 for detecting the movement of the sheet 3, such as for example an optical encoder installed on the printing machine 2. The circuit ensures that, starting from the beginning of each sheet 3, every line acquired always corresponds to the same spectral component and that every line furthermore corresponds to a well-defined spatial advancement of the sheet.

The lines are acquired with a frequency equal to N times the frequency necessary in order to obtain the desired spatial resolution. In other words, for each movement of the sheet 3 which is equal to the resolution desired (for example 0.1 mm) a number of lines N is acquired which is equal to the number of spectral components used. Thus it is ensured that the final image will have the required resolution for each spectral component.

Given that the lines in any case are acquired with the sheet 3 in motion, the N lines corresponding to the different spectral components do not correspond exactly to the same portion of sheet 3; however, the slight offset that results is corrected by the computer 13 using an image resampling algorithm.

The number N of spectral components that can be used for a given acquisition procedure is limited by the acquisition speed of the video camera 5, and therefore the possibility exists of using only a subset of the spectral components that the LED sources of the lighting device 7 are capable of emitting. In other words, the lighting device 7 is provided with a programming device that makes it possible to select only K of the N wavelengths available, so as to acquire only K lines for each movement of the sheet, where K is clearly smaller than N. The use of a limited number of spectral components is acceptable in that generally it is sufficient to use two or three different wavelengths. In any case, the apparatus 1 also lends itself to being used with a larger number of different wavelengths.

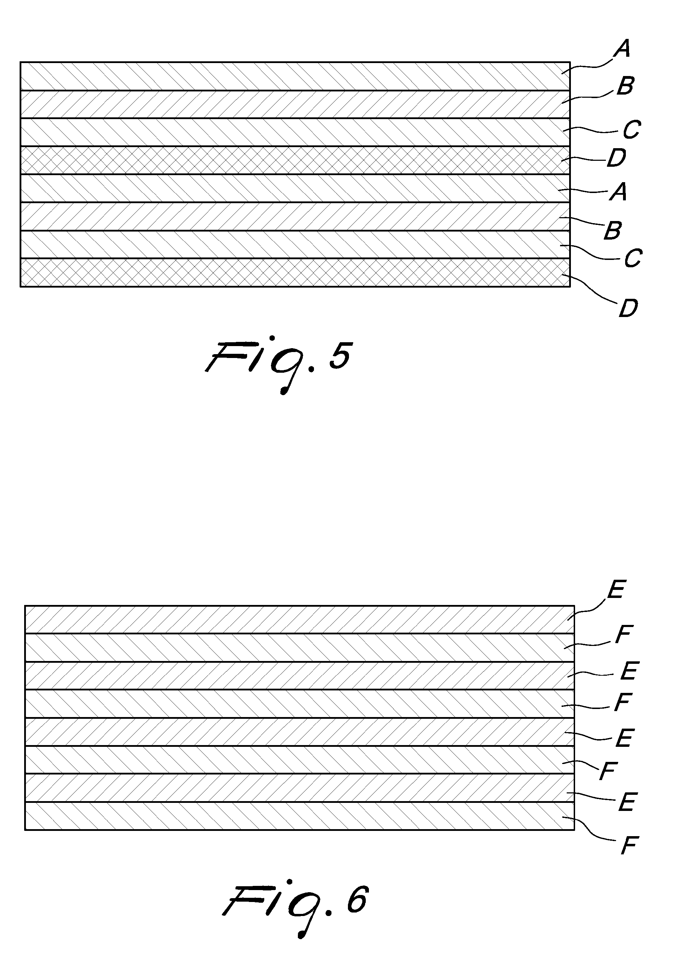

By way of example, Figure 5 shows an example of image acquisition using four different spectral bands (A, B, C, D), while Figure 6 shows an example of image acquisition using two different spectral bands (E, F). In the first case, for every movement of the sheet equal to the desired spatial resolution, the video camera 5 acquires four consecutive acquisition lines having different colors according to the switching of the wavelengths of the lighting device 7, while in the second case, for every movement of the sheet equal to the desired spatial resolution, two different acquisition lines are acquired. In this manner, in the second case, the speed of movement of the sheet can be double for the same spatial resolution, or the spatial resolution can be double (for example 0.05 mm instead of 0.1 mm) for the same speed of movement of the sheet.

As described previously, the apparatus 1 advantageously comprises a sliding surface 15 which is provided with a curved profile 19 from which protrudes a rounded raised portion 21, which is preferably provided with suction holes 23. This is needed in order to ensure the adherence of the sheet 3 to the sliding surface 15. In fact the entrainment gripper 17, proximate to the grip zone of the sheet 3, has the drawback of maintaining the sheet 3 at a distance comprised between 5 and 10 mm from the sliding surface 15, with a consequent degradation of the quality of image acquisition at such region. The presence of the rounded raised portion 21 and of the suction holes 23 is aimed at overcoming such drawback: when the sheet 3 approaches the region of the sliding surface 15 where the suction holes 23 are present, it tends to adhere to the lower sucking surface, and as it advances toward the rounded raised portion 21, the sheet 3 is laid flat by the combined action of the entrainment against the raised portion 21, by way of the gripper 17, and of the suction provided by the suction holes 23. In this manner undulations of the sheet 3 are reduced, including proximate to the grip zone and even at a few millimeters from the leading edge of the sheet 3 proper, thus preventing "flapping".

The suction holes 23 advantageously also extend downstream of the acquisition line 25, in order to suck in any air flows at the rear which are generated by the movement of the sheets 3. Furthermore, in order to enable the correct handling of sheets of paper with different basis weight, the suction force is adjustable by way of an adapted control circuit that regulates the suction pump. Furthermore it is possible to apply local adjustments of the air flow by way of adapted dividers arranged on the suction ducts.

In practice it has been found that the apparatus for acquiring multispectral images of printed sheets, according to the present invention, achieves the intended aim and objects in that it makes it possible to acquire, in real time, high-resolution multispectral images of a printed sheet.

Another advantage of the apparatus, according to the invention, consists in being able to select, according to requirements, the number and type of spectral bands that are most suitable for the type of acquisition required.

Another advantage of the apparatus, according to the invention, consists in that it can be easily installed on conventional printing machines.

Another advantage of the apparatus, according to the invention, consists in that it can easily be used for acquiring multispectral images of printed sheets of large dimensions.

The apparatus for acquiring multispectral images of printed sheets, and the corresponding method of acquisition, thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. MI2013A001580 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for acquiring multispectral images of printed sheets, comprising a device for acquiring images of a printed sheet (3) and a device for lighting said printed sheet (3), **characterized in that** said image acquisition device is a grayscale video camera (5) and **in that** said lighting device is a variable-spectrum lighting device (7).

2. The apparatus (1) for acquiring multispectral images of printed sheets according to claim 1, **characterized in that** said grayscale video camera (5) and said variable-spectrum lighting device (7) are linear.

3. The apparatus (1) for acquiring multispectral images of printed sheets according to claims 1 and 2, **characterized in that** it comprises a sensor (9) for detecting said printed sheet (3) and a sensor (11) for detecting the motion of said printed sheet (3), which is connected to a computer (13), said computer (13) managing the synchronization of the operation of said grayscale video camera (5) and of said variable-spectrum lighting device (7) with the operation of a system (4) for conveying said printed sheet (3).

4. The apparatus (1) for acquiring multispectral images of printed sheets according to one or more of the preceding claims, **characterized in that** it comprises a surface (15) for the sliding of said printed sheet (3), said printed sheet (3) being entrained along said sliding surface (15), which has a curved profile (19), by at least one entrainment gripper (17), said sliding surface (15) comprising a rounded raised portion (21) that protrudes from said curved profile (19), said entrainment gripper (17) being adapted to place in traction said printed sheet (3) when passing over said rounded raised portion (21).

5. The apparatus (1) for acquiring multispectral images of printed sheets according to one or more of the preceding claims, **characterized in that** said sliding surface (15) comprises, at said rounded raised portion (21), a plurality of suction holes (23), which are adapted to retain said printed sheet (3) so that it adheres to said sliding surface (15).

6. The apparatus (1) for acquiring multispectral images of printed sheets according to one or more of the preceding claims, **characterized in that** said variable-spectrum lighting device (7) comprises a plurality of LED sources, each adapted to emit radiation at a certain wavelength that is selected from a group comprising at least two different wavelengths.

7. The apparatus (1) for acquiring multispectral images of printed sheets according to one or more of the preceding claims, **characterized in that** said variable-spectrum lighting device (7) comprises a plurality of LED sources, each adapted to emit radiation at a certain wavelength that is selected from a group comprising a number N of different wavelengths, said variable-spectrum lighting device (7) comprising a programming device that is adapted to activate sequentially the LED sources that emit radiation at a certain wavelength that is selected from a group comprising a number K, equal to or smaller than N, of different wavelengths.

8. A method for acquiring multispectral images of printed sheets, **characterized in that** it repeats, for a number of times equal to N, where N is the number of different wavelengths at which a printed sheet (3) is irradiated, the steps of:
- generating radiation at a certain wavelength at an image acquisition line (25) on said printed sheet (3);
- acquiring an image of said printed sheet (3) at said acquisition line (25);
and **in that** it further comprises the step of:
- causing the advancement of said printed sheet (3) in a manner that is synchronized with the repetition of said steps of generating radiation and acquiring an image.

9. The method for acquiring multispectral images of printed sheets according to claim 8, **characterized in that** the advancement speed of said printed sheet (3) is directly proportional to the image acquisition frequency according to a factor equal to N.

10. The method for acquiring multispectral images of printed sheets according to claim 8 or 9, **characterized in that** it comprises a step of correcting the misalignment, produced by the advancement of said printed sheet (3), between the images of a same portion of said printed sheet (3) which were acquired during said repetition of said steps of generating radiation and acquiring an image.
